# EUROPEAN PATENT APPLICATION

(11) **EP 3 206 139 A1**
(43) Date of publication of application: **16.08.2017**
(21) Application number: 15849593.7
(22) Date of filing: 07.07.2015
(51) Int. Cl.: G06F 17/30

(54) **CIRCLE LAYER SYSTEM CONSTRUCTION METHOD AND APPARATUS**

(30) Priority: 10.10.2014 CN 201410529543
(71) Applicant: Shenzhen Vchan Technology Co., Ltd, Shenzhen, Guangdong 518000 (CN)
(72) Inventor: QIN, Yuan, Shenzhen Guangdong 518000 (CN)
(74) Representative: Dargiewicz, Joanna
(86) International application number: PCT/CN2015/083419
(87) International publication number: WO 2016/054934

(57) **Abstract**

The present invention discloses a circle layer system construction method and apparatus. The method comprises the following steps: when the circle layer system construction apparatus receives circle layer system rules edited by a first terminal apparatus, determining a basic framework and basic functions of the circle layer system according to the circle layer system rules; when the circle layer system construction apparatus receives names of circles of all layers of the circle layer system edited by a second terminal apparatus, constructing a circle layer system according to the names of the circles of all the layers and the above predetermined basic framework of the circle layer system, and forming a layer relationship of the circles; and when the circle layer system construction apparatus receives layer data of a user edited by a third terminal apparatus, adding the user to the corresponding circle of the corresponding layer of the above constructed circle layer system according to the layer data of the user. The technical solution described above can lower the cost in relationship establishment remarkably, while at the same time improving communication efficiency.

## Description

### TECHNICAL FIELD

The present invention relates to the fields of Internet and mobile Internet, the relevant social field and the social network field, and in particular relates to a circle layer system construction method and apparatus in the social network field.

### BACKGROUND

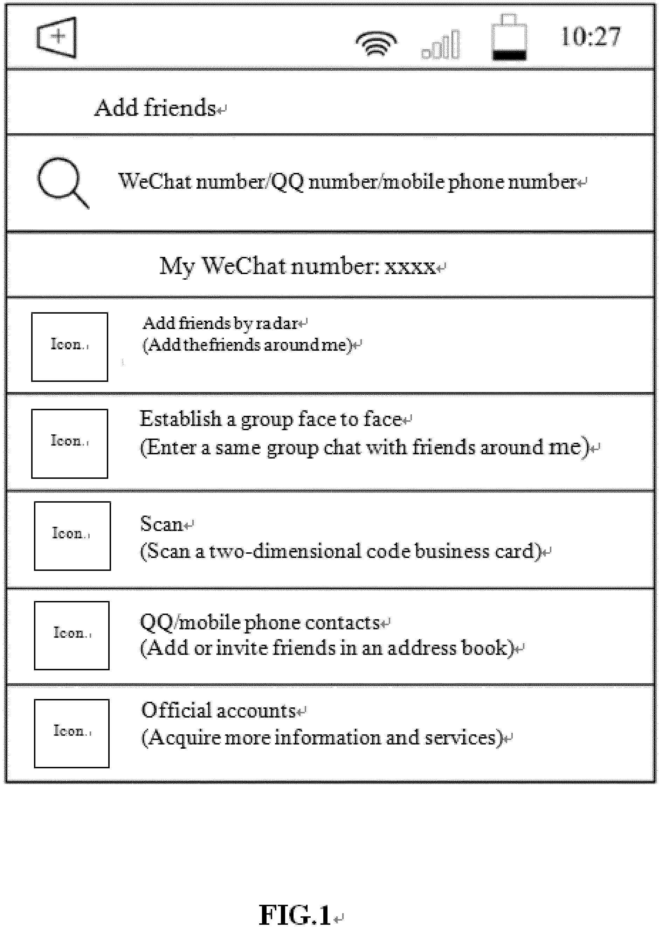

A friend relationship and group relationship creation method of a piece of mobile communication social software in the prior art-WeChat (similar software also includes: QQ, Momo, Renren, various forums, etc.) mainly adopts technologies such as WEB2.0, instant communication and the like. With reference to Fig. 1, the WeChat known very well by everyone is described below as an example:
1. a friend relationship is established: friends are connected by various manners to establish a point-to-point relationship, and the specific manners are described below:
   (1) clicking a plus sign at the upper right of an interface of the WeChat, adding a friend, searching a number, inputting a WeChat number that a user wants to search and then clicking search;
   (2) adding the friend by a radar;
   (3) adding the friend by scanning a two-dimensional code;
   (4) adding the friend by QQ;
   (5) adding the friend by a mobile phone address book;
   (6) adding the friend by sharing the WeChat number;
   (7) adding the friend by shaking;
   (8) accepting the friend by a drift bottle; etc.
2. a group relationship is established: people are gathered into a group by various manners to establish the group relationship; the group relationship is established usually in a manner of "clicking a plus sign on the interface of the WeChat and initiating a group chat" or in a manner of "establishing a group face to face", and on a basis of this, interactive communication between groups is carried out by selecting a group, selecting friends from an address book to establish a group, finding a group in the interface of the WeChat and selecting a group from the address book.

In conclusion, the point-to-point relationship of friends can be established in various manners by the WeChat, and the group relationship is established on the premise of establishing the friend relationship in advance.

The WeChat helps people to establish a good interpersonal relationship basis and makes significant contribution to the social network field. However, the WeChat and a series of social network software of QQ, Momo, Renren, Kaixin, etc. have a common characteristic: flattened, wherein everyone can have a plurality of WeChat groups with equal relationships, the WeChat groups do not have a hierarchical relationship on a plane and a level, and any group does not include the other groups or belong to the other groups.

At present, the WeChat has more manners of point-to-point addition of the friends and has a very strong competitive advantage. However, similar to other social software, the WeChat obviously has two defects in the aspect of formation of the group relationship:
(1) unable to establish a hierarchical system relationship and form an organizational architecture relationship due to flattening of the group relationship;
(2) unable to form large-scale extension since the group has the upper limit for the number of people.

However, in fact, the flattening relationship cannot adapt to an institution or an organization with the hierarchical relationship or with a demand on the hierarchical relationship; many institutions, such as campuses and enterprises, have the hierarchical relationships, so the necessary hierarchical relationships are clearly teased to be conductive to improving communication efficiency and quality, reducing communication cost and decreasing ineffective communication.

The actually existing hierarchical relationship has a real positive significance, while Internet as an auxiliary means is required to solve the above problems existing in the prior art. Therefore, the construction of the hierarchical relationship in the Internet field (in particular in the mobile Internet field) is imperative.

Through an investigation, it is known that many enterprises, institutions and organizations cannot establish own organization relationships by the WeChat at present, so more communication about work cannot be realized in the WeChat, and the enterprises, the institutions and the organizations begin to seek a better organizational structure relationship solution.

### Technical Problem

In view of the above contents, the present invention proposes a circle layer system construction method and apparatus, which can better realize the establishment of a three-dimensional relationship inside and outside an institution and an organization by quickly constructing a circle layer system, and greatly reduce the relationship establishment cost without the need of adding a friend at first, while increasing the communication efficiency.

### Solution to Problem

The circle layer system construction method is applied to a circle layer system construction apparatus and comprises:
a circle layer system rule determining step: when the circle layer system construction apparatus receives circle layer system rules edited by a first terminal apparatus, determining a basic framework and basic functions of the circle layer system according to the circle layer system rules;
a circle layer system construction step: when the circle layer system construction apparatus receives names of circles at all layers of the circle layer system edited by a second terminal apparatus, constructing a circle layer system according to the names of the circles at all the layers and the above predetermined basic framework of the circle layer system, and forming a layer relationship of the circles;
a user circle layer relationship managing step: when the circle layer system construction apparatus receives layer data of a user edited by a third terminal apparatus, adding the user to the corresponding circle at the corresponding layer of the above constructed circle layer system according to the layer data of the user.

The circle layer system construction apparatus comprises:
a circle layer system rule determining module, used for determining a basic framework and basic functions of the circle layer system according to the circle layer system rules when the circle layer system construction apparatus receives the circle layer system rules edited by a first terminal apparatus;
a circle layer system construction module, constructing a circle layer system according to the names of the circles at all layers and the above predetermined basic framework of the circle layer system, and forming a layer relationship of the circles when the circle layer system construction apparatus receives names of circles at all layers of the circle layer system edited by a second terminal apparatus;
a user circle layer relationship managing module, adding a user to the corresponding circle at the corresponding layer of the above constructed circle layer system according to the layer data of the user when the circle layer system construction apparatus receives layer data of the user edited by a third terminal apparatus.

Compared with the prior art, the circle layer system construction method and apparatus described in the present invention better realizes the establishment of a three-dimensional relationship inside and outside an organization by quickly constructing a circle layer system, and greatly reduces the relationship establishment cost without the need of adding a friend at first, while increasing the communication efficiency. The present invention is mainly suitable for institutions and organizations, such as campuses, community organizations, enterprise internal architectures, enterprise external marketing networks, etc., with layer architectures.

### Beneficial Effects of the Invention

In summary, the present invention can generate the following beneficial effects: the present invention can facilitate the institutions and the organizations with the layer architectures in establishing an organizational system at a mobile end, and facilitate the search of interpersonal relationships within the organizational system and timely formation of interactive communication.

An original communication way limited by time and places is changed into a barrier-free communication way at any time and any place, especially embodied in internal and external aspects:
Internal: communication within the institutions can be enhanced, and the problems of slow decision making and errors caused by too many original circle layer systems are effectively overcome;
External: a zero-distance relationship with a customer is better formed; interactive communication with the customer is conducted in time; the problems of the customer are understood and solved, and timely and thoughtful services are provided; a supplier is facilitated in gradually reducing intermediate agents, and intermediate links are reduced, thereby reducing the cost, promoting the profit margin and improving the communication efficiency and quality.

### Brief Description of the Drawings

Fig. 1 is a schematic diagram for establishing a friend relationship through WeChat in the prior art;
Fig. 2 is an application environment diagram of a circle layer system construction apparatus in the present invention;
Fig. 3 is an overall flow chart of a circle layer system construction method in the present invention;
Fig. 4 is a schematic diagram of a circle-in-circle structural mode in the present invention;
Fig. 5 is a schematic diagram for editing names of circles at all layers of the circle layer system in a second terminal apparatus;
Fig. 6 is a schematic diagram for adding a lower-layer circle in a second terminal apparatus;
Fig. 7 is a schematic diagram for modifying names of circles in a second terminal apparatus;
Fig. 8 is a schematic diagram for releasing a relationship with a lower-layer circle in a second terminal apparatus; and
Fig. 9 is a schematic diagram for editing layer data of a user in a third terminal apparatus.

### Optimal Embodiments of the Invention

In order to facilitate understanding for the present invention, relevant terms used in the present implementation manner are described briefly at first.

A circle: i.e. a community, also called a relationship circle, refers to a group of people with same hobbies and interests or bonded together for some specific purpose, which is formed naturally according to social behavior characteristics among the people and can be understood as a group relationship.

A circle master: refers to an administrator of some circle.

A layer: i.e. a hierarchy, wherein a leader has a uniform linear relationship with a subordinate thereof, and commands and instructions are implemented from top to bottom along the vertical direction from a highest layer to a lowest layer of a leader system, so as to form a series of different layers and show a step hierarchy in a "pyramid" shape from top to bottom, which can also be popularly interpreted as an upper and lower layer relationship and possibly have a relationship of including and included.

A circle layer: refers to a generalization of a medium-and high-end specific social group that is naturally generated under the social stratification background. The circle layer can be a generalized hierarchy with the same social attribute and can also be a group with strong social bonds and similar social attributes in a region. The circle layer in the text is a generalized circle layer, which is not necessarily a medium-and high-end group and can also be a combination of groups belonging to some institution and organization.

A circle layer system: is an organizational architecture with groups and hierarchies formed by circles and layers, and members located in any circle at any hierarchy can form an interrelationship (except that the administrator configures that the members in the circle are invisible.). The circle layer system can also be interpreted in a way that UDLR (Up, Down, Left, Right) relevance is formed between the circles and between the layers in the same institution and organization for some reason, while the relationships of an upper layer and a lower layer, managing and managed, including and included and the like are formed.

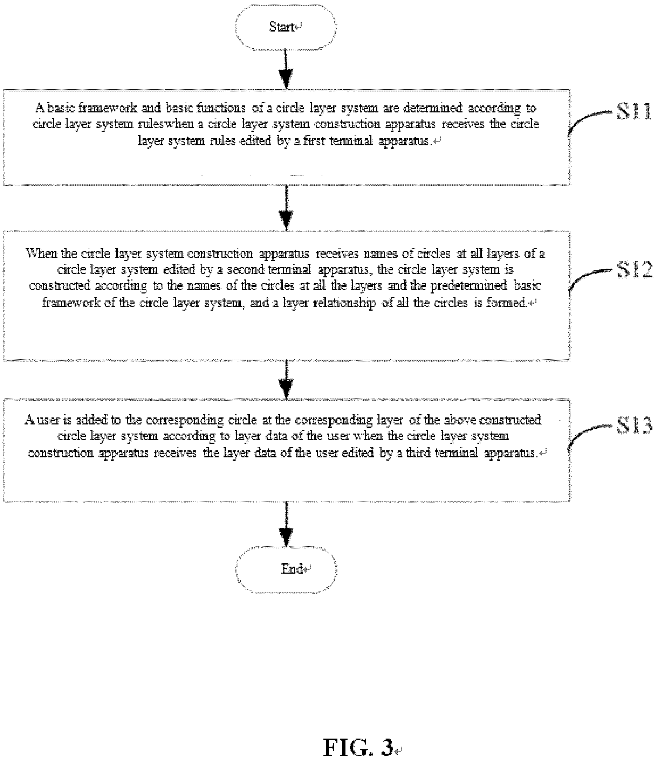

A circle layer system construction method (or called a "circle layer system construction technology"): refers to a closed relationship which is formed through the combination of people, circles and layers by a specific means and a specific method (see details in Fig. 3), so as to realize an organic and effective relevance between the people, between the circles, between the layers, between the people and the circles, between the people and the layers and between the circles and the layers.

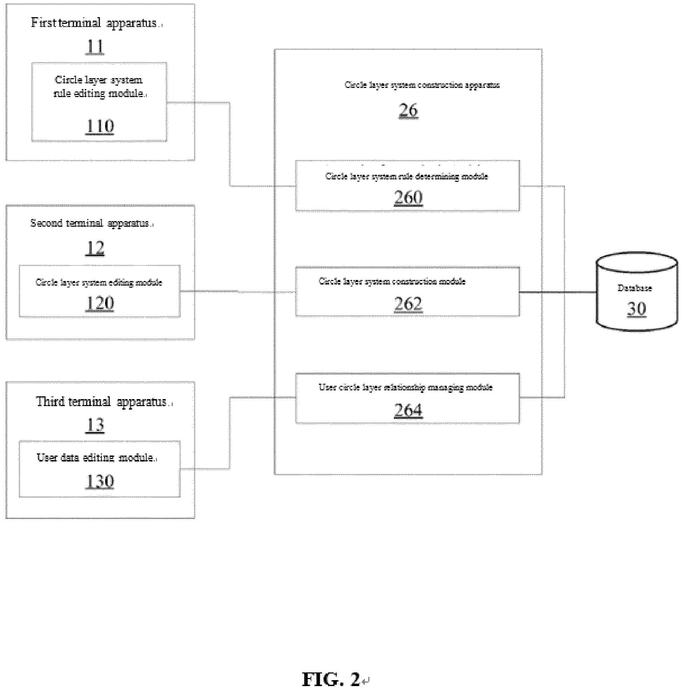

Fig. 2 is an application environment diagram of a circle layer system construction apparatus of the present invention. In the present implementation manner, the circle layer system construction apparatus 26 is connected with a first terminal apparatus 11, a second terminal apparatus 12 and a third terminal apparatus 13 by a network (comprising a wired network and a wireless network) and is connected with a database 30 through database connection (such as ODBC (Open Database Connectivity)),
wherein, the circle layer system construction apparatus 26 comprises: a circle layer system rule determining module 260, a circle layer system construction module 262 and a user circle layer relationship managing module 264. The modules of the present invention can be computer program segments completing a specific function and can also be chips cured with the above computer program segments. The circle layer system construction apparatus 26 can be a computer or a server, and the first terminal apparatus 11, the second terminal apparatus 12 and the third terminal apparatus 13 can be electronic apparatuses such as a laptop, a mobile phone, a tablet personal computer and the like.

Further, the first terminal apparatus 11 comprises a circle layer system rule editing module 110,
wherein the circle layer system rule editing module 110 is configured to edit circle layer system rules and transmit the circle layer system rules to the circle layer system construction apparatus 26. In the present implementation manner, the circle layer system rules comprise but not limited to a basic framework of a circle layer system, a function for extending the number and the layers of circles in the circle layer system, and functions for creating and releasing upper and lower layer relationships and the like. When the circle layer system rule determining module 260 in the circle layer system construction apparatus 26 receives the circle layer system rules edited by the first terminal apparatus 11, the basic framework and the basic functions of the circle layer system are determined according to the circle layer system rules, and the basic framework and the basic functions of the circle layer system are stored in the database 30.

The second terminal apparatus 12 comprises a circle layer system editing module 120, wherein the circle layer system editing module 120 is configured to edit names of circles at all layers of the circle layer system and transmit the names of the circles at all the layers of the circle layer system to the circle layer system construction apparatus 26. When the circle layer system construction module 262 in the circle layer system construction apparatus 26 receives the names of the circles at all the layers of the circle layer system edited by the second terminal apparatus 12, the circle layer system is constructed according to the names of the circles at all the layers and the predetermined basic framework of the circle layer system, a layer relationship of all the circles is formed, and the layer relationship of all the circles are stored in the database 30.

The third terminal apparatus 13 comprises a user data editing module 130, wherein the user data editing module 130 is configured to edit layer data of a user and transmit the layer data of the user to the circle layer system construction apparatus 26. When the user circle layer relationship managing module 264 in the circle layer system construction apparatus 26 receives the layer data of the user edited by the third terminal apparatus 13, the user is added to the corresponding circle at the corresponding layer of the above constructed circle layer system according to the layer data of the user, and the layer data of the user are stored in the database 30. A specific method is described with reference to Figs. 3-9.

It should be noted that: the first terminal apparatus 11, the second terminal apparatus 12 and the third terminal apparatus 13 can be the same apparatus, and Fig. 1 is only a schematic description of software structures and hardware structures of the first terminal apparatus 11, the second terminal apparatus 12, the third terminal apparatus 13 and the circle layer system construction apparatus 26. The above apparatus further comprises other necessary electronic components and system software, such as a display screen, an input device, a memory, a processor, an operation system and the like connected by a data line or a signal line, which are not described repeatedly herein. The plurality of modules can be respectively stored in memories of different apparatuses and configured to be executed by one or more processors, so as to complete the present invention.

Fig. 3 is an overall flow chart of a circle layer system construction method of the present invention.

Step S11, the basic framework and the basic functions of the circle layer system are determined according to the circle layer system rules when the circle layer system rule determining module 260 in the circle layer system construction apparatus 26 receives the circle layer system rules edited by the first terminal apparatus 11.

In the present implementation manner, the circle layer system rules comprise but not limited to the basic framework of the circle layer system, the function for extending the number and the layers of the circles in the circle layer system, and the functions for creating and releasing the upper and lower layer relationships and the like. The basic framework of the circle layer system is in a tree-shaped layer structure and comprises: the function for extending the number and the layers of the circles in the circle layer system, and the functions for creating and releasing the upper and lower layer relationships and the like.

Step S12, the circle layer system is constructed according to the names of the circles at all the layers and the predetermined basic framework of the circle layer system to form the layer relationships of all the circles when the circle layer system construction module 262 in the circle layer system construction apparatus 26 receives the names of the circles at all the layers of the circle layer system edited by the second terminal apparatus 12, wherein each circle in the circle layer system has the corresponding basic function. For example, a circle master of an upper-layer circle can appoint a circle master of a lower-layer circle and can also release a relationship with the lower-layer circle, etc.

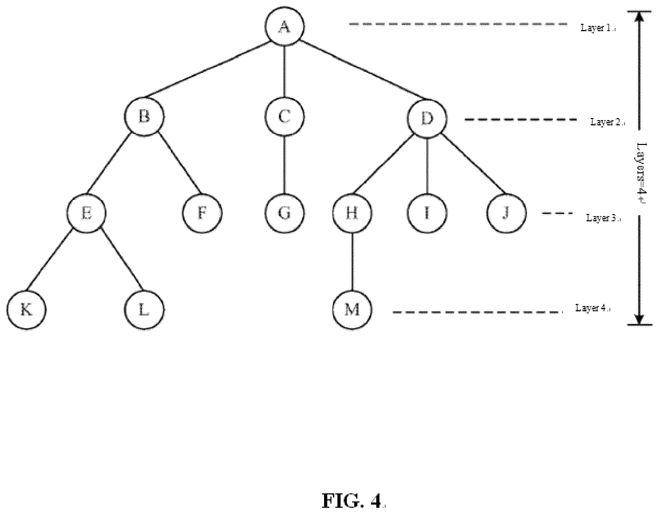

With reference to Fig. 4, in the present implementation manner, the circle layer system is a circle-in-circle structural mode (i.e. a tree-shaped layer structural mode), the circle-in-circle structural mode comprises all the circles at all the layers in the circle layer system, and any circle in a circle layer can be found by the layer relationship, wherein each circle comprises all members of the lower-layer circle of the circle, and the circle master of each circle can configure the permission of the lower-layer circle of the circle. For example, the circle master can appoint the circle master of the lower-layer circle of the circle and can also release the relationship with the lower-layer circle of the circle. Meanwhile, in the circle-in-circle structural mode, each circle is not limited by the number of people, and the layer is also not limited by the number of layers.

As shown in Fig. 4, the position of each node (expressed by a letter) in the circle-in-circle structural mode represents one basic unit, i.e. one circle in the circle layer system, and the position of each circle corresponds to one layer of the circle. For example, a circle A is at a first layer, circles B, C and D are at a second layer, and so on.

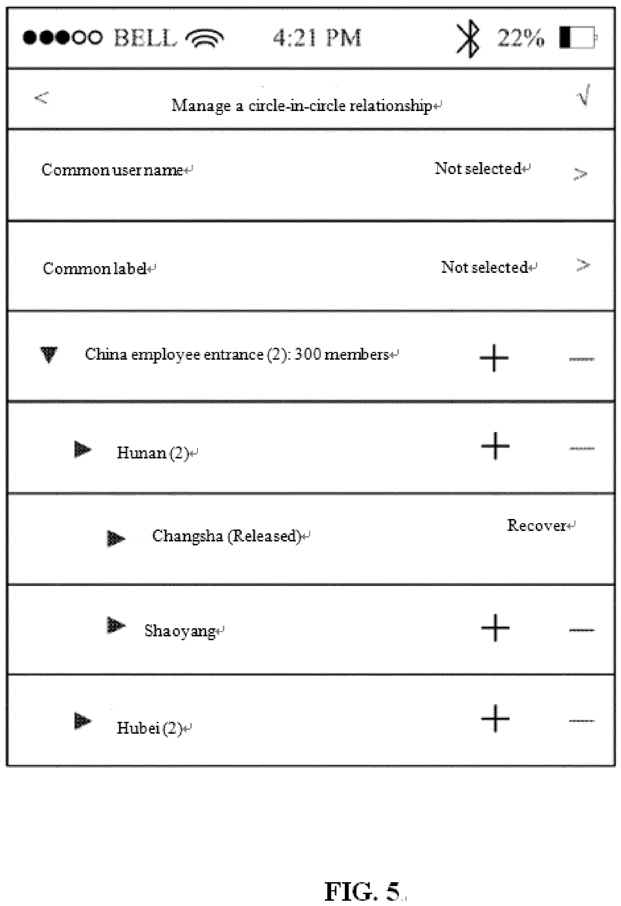

In the present implementation manner, an organizer can realize "one-key creation" of the circles at all layers by the circle layer system editing module 120 in the second terminal apparatus 12. For example, with reference to Fig. 5, the organizer can construct all the circles in the whole circle layer system at one time through submission by one button after the names of the circles at all the layers of the circle layer system are written, and the layer relationship of all the circles is automatically formed.

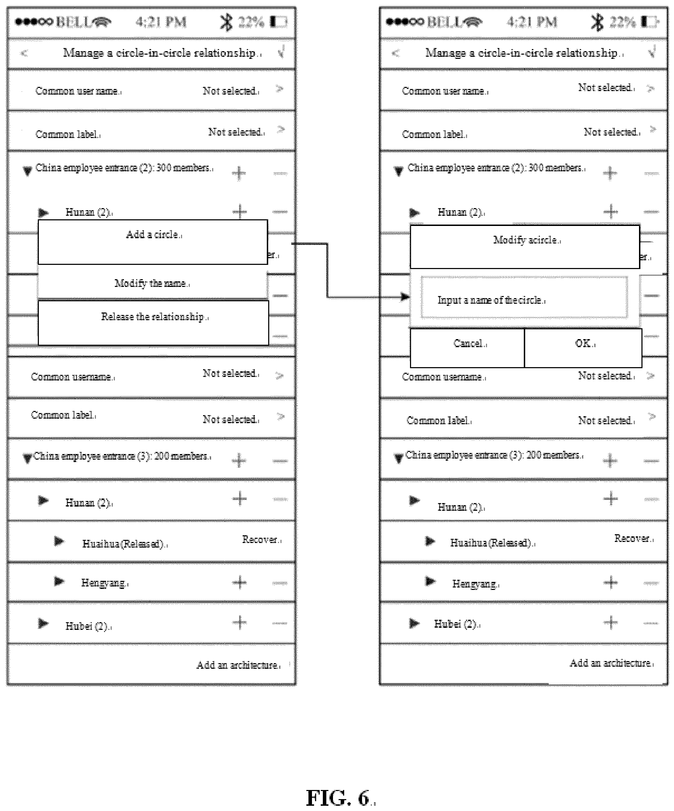

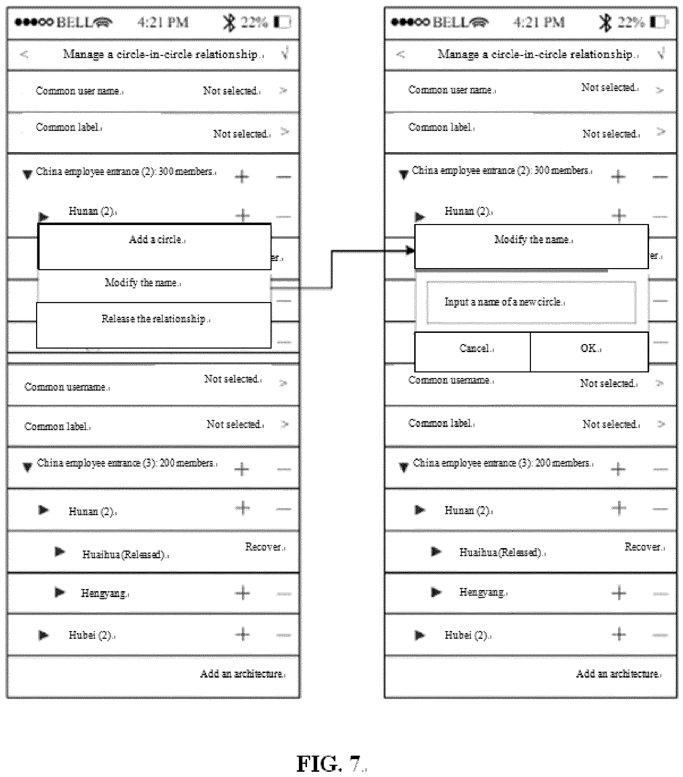

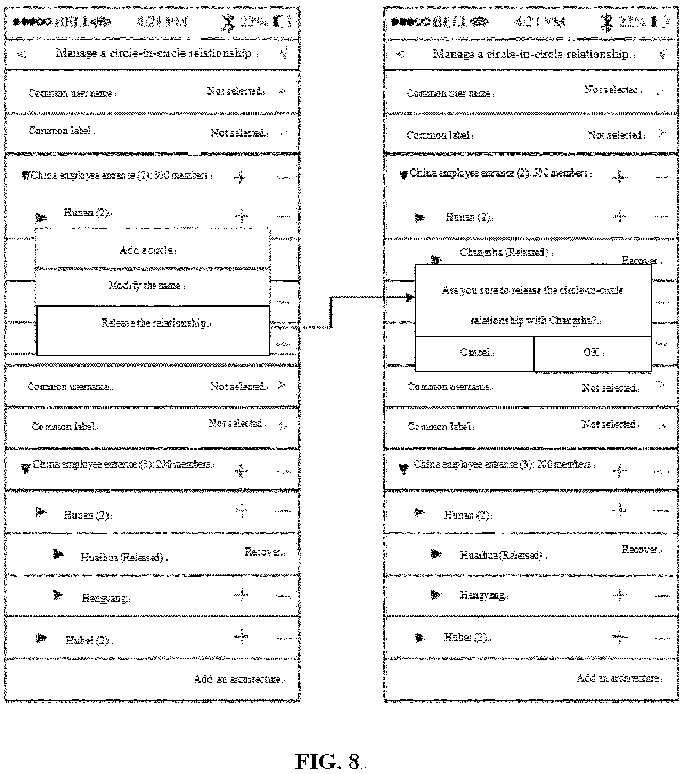

Fig. 5 is a specific form representing a circle-in-circle structure of some social software. A circle of "China employee entrance" has two lower-layer circles: a Hunan circle and a Hubei circle, wherein the Hunan circle has two lower-layer circles: a Changsha circle and a Shaoyang circle, and the Hunan circle is entered by clicking the circle (such as Hunan) at each layer. A circle administrator can manage the circle and the lower-layer circle of the circle with a certain permission. For example, the lower-layer circle is added (with reference to Fig. 6), the name of the circle is modified (with reference to Fig. 7), the relationship with the lower-layer circle is released (with reference to Fig. 8), etc.

In conclusion, in the present implementation manner, the organizer can realize a circle-in-circle managing function in a "one-page management" mode, and administrators of the circles at all layers can flexibly extend and optimize the architecture of the circle layer system by the circle-in-circle managing function. For example, the layers and the circles below the current layer can be added, or corresponding circles at the current layer and the layer below the current layer can also be deleted, etc.

Further, when the circle layer system construction module 262 in the circle layer system construction apparatus 26 receives a basic function operation by the second terminal apparatus 12 with respect to the circles at all the layers of the circle layer system, the above predetermined basic functions of the circle layer system are invoked, the corresponding basic function operation is executed, and an execution result is returned to the second terminal apparatus 12.

For example, when the organizer executes an operation of modifying the name of the circle in the second terminal apparatus 12, the circle layer system construction module 262 invokes the basic function of modifying the name of the circle, executes the operation of modifying the name of the circle and returning the modification result to the second terminal apparatus 12. The execution processes of other basic functions, such as the functions of adding the lower-layer circle, releasing the relationship with the lower-layer circle, the circle-in-circle managing function and so on, are similar to that of the function of modifying the name of the circle, which are not repeated herein.

Step S13, the user is added to the corresponding circle at the corresponding layer of the above constructed circle layer system according to the layer data of the user when the user circle layer relationship managing module 264 in the circle layer system construction apparatus 26 receives the layer data of the user edited by the third terminal apparatus 13.

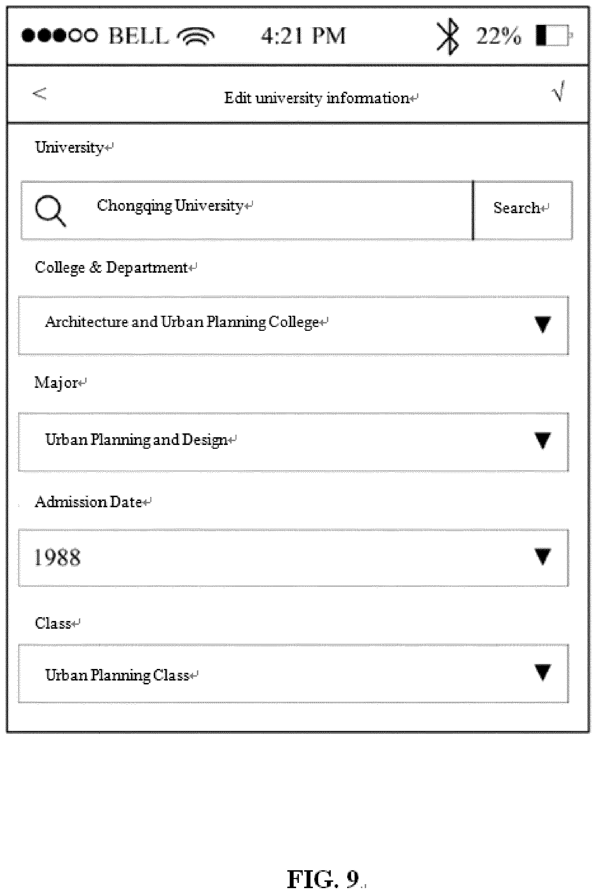

In the present implementation manner, the user is added to the circles at all the layers in the circle layer system through a "one-key operation", each member in the circle layer system can fill in or select relevant personal data (the layer data) matched with the own circle layer, and the user can be added to the corresponding circle at the corresponding layer through submission by one button. As shown in Fig. 9, the user starts to select according to the preset structure from a second layer of "Architecture and Urban Planning College". The user can enter the direct upper-layer circle of each circle while entering each circle, and so on, up to the top layer of the circle layer system. If the user is a student of an urban planning class, the user is added to five circles of the circle layer system at one time: school, college and department, major, admission date and class.

In conclusion, each member enters the corresponding layer and the corresponding circle, i.e. the circle layer. Users in the same circle can communicate with each other (specifically, the permission set by the circle master takes precedence.). Meanwhile, all the users in the circle layer system can be switched at all the circles and layers in the circle layer system through the circle-in-circle managing function to realize wandering of the users in all the circle layers, and all the users can also enter corresponding other circles in the circle layer system for interactive communication with corresponding circle friends through the circle-in-circle managing function.

Application examples of the circle layer system construction method of the present invention are illustrated below through specific simulation scenarios.

A Simulation Scenario I: many people establish relationships with the classes, the grades and classmates with the same major when in school and make little acquaintance with higher layers, and the original relationships are further decreased after graduation, so it is very regrettable. Actually, the classmate relationship established without any beneficial relationship has a very positive meaning in career development, which is one of important resources exhausted in life at present.

More undergraduates can establish a relationship with external resources when in school through the circle layer system construction method described by the present invention, which is good for both employment of the undergraduates and recruitment of enterprises.

It is supposed that: if someone is a student from the department of foreign languages of Hangzhou Normal University, and Mayun is just in the circle layer ("the department of foreign languages of Hangzhou Normal University"), the interpersonal relationship quality of the student is greatly improved. Of course, this is only an example. Even if the university of the student does not have a tycoon or a student with great achievements, other brothers and sisters who are worthy being learned by the students of the university or bring the growth value to the students of the university can also be in the circle at least.

A Simulation Scenario II: two persons work for some group enterprise and have a relationship between colleagues, but an effective communication relationship is not established among various regions possibly since the organization is too big, therefore, the two persons may not know each other through the whole life.

However, group members at different layers at different regions can meet and can communicate with each other at some layer through the circle layer system construction method described by the present invention, so full utilization of the resources becomes possible from impossibility.

This cannot be realized by the prior art before the circle layer system construction method of the present invention is proposed, however, the circle layer system construction method described by the present invention can help people in the same circle layer system to find mutual relationships of the people.

A Simulation Scenario III: some brand agent selling network is from provincial agents, municipal agents and regional agents, and a selling network system can be clearly shown by the circle layer system construction method described by the present invention, which is beneficial for suppliers to gradually decrease middle agents and cut down middle links, so as to reduce the cost, enhance the profit margin, not only facilitates relationship management of the upper layer for the lower layer, but also facilitates search and use of clients; and meanwhile, a proper lateral comparison can also be made between different websites.

The above contents are the detailed descriptions for the present invention in combination with the specific preferred implementation manners, and specific implementation cannot be considered to be limited to these descriptions. Those ordinary skilled in the art can also make several simple deductions or replacements on the premise of not departing from the concept of the present invention, and the deductions or the replacements should be deemed to be included in the protection scope of the present invention.

## Claims

1. A circle layer system construction method, applied to a circle layer system construction apparatus, and **characterized by** comprising:
a circle layer system rule determining step: when the circle layer system construction apparatus receives circle layer system rules edited by a first terminal apparatus, determining a basic framework and basic functions of the circle layer system according to the circle layer system rules;
a circle layer system construction step: when the circle layer system construction apparatus receives names of circles at all layers of the circle layer system edited by a second terminal apparatus, constructing a circle layer system according to the names of the circles at all the layers and the above predetermined basic framework of the circle layer system, and forming a layer relationship of the circles; and
a user circle layer relationship managing step: when the circle layer system construction apparatus receives layer data of a user edited by a third terminal apparatus, adding the user to the corresponding circle at the corresponding layer of the above constructed circle layer system according to the layer data of the user.

2. The circle layer system construction method according to claim 1, **characterized in that**: the basic framework of the circle layer system is a tree-shaped layer structure; the basic functions of
the circle layer system comprise: the function for extending the number and the layers of the circles in the circle layer system, and the functions for creating and releasing the upper and lower layer relationships; and
the circle layer system has a circle-in-circle structural mode; the circle-in-circle structural mode comprises all circles at all layers in the circle layer system, wherein each circle comprises all members of a lower-layer circle of the circle.

3. The circle layer system construction method according to claim 2, **characterized in that** an administrator of each circle sets the permission of the lower-layer circle; and in the circle-in-circle structural mode, each circle is not limited by the number of people, and the layer is also not limited by the number of layers.

4. The circle layer system construction method according to claim 2, **characterized in that** the position of each node in the circle-in-circle structural mode represents one circle in the circle layer system, and the position of each circle corresponds to one layer of the circle.

5. The circle layer system construction method according to claim 2, **characterized in that** the circle layer system construction step further comprises:
when the circle layer system construction apparatus receives the basic function operation by the second terminal apparatus with respect to the circles at all layers of the circle layer system,
invoking the above predetermined basic functions of the circle layer system, executing the corresponding basic function operation, and returning an execution result to the second terminal apparatus.

6. The circle layer system construction method according to claim 5, **characterized in that** the basic functions comprise: adding the lower-layer circle, modifying the name of the circle and releasing the relationship with the lower-layer circle.

7. The circle layer system construction method according to claim 6, **characterized in that** the basic functions further comprise a circle-in-circle managing function; the circle-in-circle managing function is used for adding the layers and the circles below the current layer, or deleting corresponding circles at the current layer and the layer below the current layer, and
the circle-in-circle managing function is also used for setting to switch all users of the circle layer system in all the circle layers in the circle layer system, and entering corresponding other circles in the circle layer system to interact and exchange with corresponding circle friends.

8. The circle layer system construction method according to claim 2, **characterized in that** when
the user is added to each circle, the user is also added to a direct upper-layer circle of the circle up to the top layer of the circle layer system.

9. A circle layer system construction apparatus, **characterized by** comprising:
a circle layer system rule determining module, used for determining a basic framework and basic functions of the circle layer system according to the circle layer system rules when the circle layer system construction apparatus receives the circle layer system rules edited by a first terminal apparatus;
a circle layer system construction module, constructing a circle layer system according to the names of the circles at all layers and the above predetermined basic framework of the circle layer system, and forming a layer relationship of the circles when the circle layer system construction apparatus receives names of circles at all layers of the circle layer system edited by a second terminal apparatus; and
a user circle layer relationship managing module, adding a user to the corresponding circle at the corresponding layer of the above constructed circle layer system according to the layer data of the user when the circle layer system construction apparatus receives layer data of the user edited by a third terminal apparatus.

10. The circle layer system construction apparatus according to claim 9, **characterized in that** the circle layer system construction module is also used for:
invoking the above predetermined basic functions of the circle layer system, executing the corresponding basic function operation, and returning an execution result to the second terminal apparatus when the circle layer system construction apparatus receives the basic function operation by the second terminal apparatus with respect to the circles at all layers of the circle layer system.
